# EUROPEAN PATENT APPLICATION

(11) **EP 3 459 392 A1**
(43) Date of publication of application: **27.03.2019**
(21) Application number: 17205667.3
(22) Date of filing: 06.12.2017
(51) Int. Cl.: A47B 67/04, E05B 65/463, A47B 97/00

(54) **SAFETY SYSTEM CAPABLE OF PREVENTING ACCIDENT CONCERNING CHEST OF DRAWERS**

(30) Priority: 21.09.2017 KR 20170121895
(71) Applicant: Kim, Byung Chul, Chungcheongbuk-do 27153 (KR)
(72) Inventor: Kim, Byung Chul, Chungcheongbuk-do 27153 (KR)
(74) Representative: Zardi, Marco

(57) **Abstract**

Disclosed herein is a safety system for a chest of drawers having drawers. The safety system includes: a sensing unit configured to detect a signal when each of drawers is pulled forward; a drive unit configured to include a drive source and a sliding unit which is linearly moved by the operation of the drive source; and a control unit configured to perform control so that the drive unit operates in accordance with a distance, to which the drawer has been pulled forward, based on the signal of the sensing unit.

## Description

### CROSS-REFERENCE TO RELATED APPLICATION

This application claims the benefit of Korean Patent Application No. 10-2017-0121895 filed on September 21, 2017, which is hereby incorporated by reference herein in its entirety.

### BACKGROUND

### 1. Technical Field

The present invention relates to a safety system which is capable of preventing an accident concerning a chest of drawers.

### 2. Description of the Related Art

Generally, a chest of drawers includes drawers configured to accommodate clothes, etc., and has a structure of multiple rows of drawers. Such chests of drawers having a structure of multiple rows of drawers enable clothes, miscellaneous items, etc. to be easily accommodated in, stored in and taken out of drawers, and, thus, are widely used in homes where infants or children are raised.

Meanwhile, chests of drawers each having a structure of multiple rows of drawers that are widely used in homes are configured such that an infant or a child can easily open the drawers thereof. Accordingly, there are many cases where a curious infant or child climbs aboard a drawer or holds a drawer as if he or she is doing a chin-up in the state in which the drawer has been opened. In these cases, a problem occurs in that a chest of drawers falls forward due to the action of force applied to a drawer. As a result, a problem occurs in that a safety-related accident, such as an accident in which an infant or a child is crushed or otherwise injured by a falling chest of drawers, occurs frequently.

In order to overcome the above problem, the present applicant proposes a chest of drawers equipped with a safety device, in which when a drawer of the chest of drawers is opened, sliding bars below the chest of drawers are moved forward, and provide a support point for the chest of drawers, thereby preventing the chest of drawers from falling over, in Korean Patent No. 1694922.

However, although this technology is novel, the technology is disadvantageous in that it is difficult to design, manufacture and assemble the chest of drawers due to the coupling of a mechanical mechanism and operation transfer and the distance to which the sliding bars are moved forward cannot be accurately controlled.

### SUMMARY

The present invention has been conceived to overcome the above-described problems, and an object of the present invention is to provide a safety system which can be simply designed and manufactured and can be conveniently installed on a chest of drawers, and a chest of drawers which is equipped with the safety system.

In order to accomplish the above object, the present invention provides a safety system for a chest of drawers having drawers, the safety system including: a sensing unit configured to detect a signal when each of drawers is pulled forward; a drive unit configured to include a drive source and a sliding unit which is linearly moved by the operation of the drive source; and a control unit configured to perform control so that the drive unit operates in accordance with a distance, to which the drawer has been pulled forward, based on the signal of the sensing unit.

The sensing unit may include one or more sensors installed on a chest of drawers at locations adjacent to the drawers, and each of the sensors may transmit a movement signal based on the distance of movement of a corresponding one of the drawers to the control unit.

The control unit may include a CPU, memory, a communication module, a driving driver, the memory may store data representative of the distances of movement matching movement signals detected by the sensing unit, and the control unit may read the data and operate the drive unit by way of the driving driver.

The drive source may be a motor, and a movable wheel may be attached to the front of the sliding unit.

The control unit may operate the drive unit when receiving a movement signal from one of the sensor, and may operate the drive unit based on the longest distance of movement when receiving movement signals from two or more of the sensors.

The drive unit may be accommodated in a long housing laterally installed below the lower plate of the chest of drawers; and the drive unit may include a motor, a driving gear coupled to the shaft of the motor, a linear rod configured to be rotated by the rotation of the driving gear and configured such that teeth are formed on the outer circumference thereof, and a sliding unit configured such that a guide hole is longitudinally formed and second teeth engaging with the teeth are formed on the inner circumference of the guide hole.

The drive unit may include an in-wheel drive mechanism including a rotor installed in the casing of the wheel, a coil and inverter unit coupled to a bearing protruding from the rotor, and a stator.

A wheel may be further installed at the center or back portion of the sliding unit.

An object sensor may be further installed on the sliding unit, and may stop the operation of the drive unit by transmitting a signal to the control unit when an object is detected within a movement distance range of the sliding unit.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a view showing the overall configuration of a safety system for a chest of drawers according to an embodiment of the present invention;
FIG. 2 is a view showing the operation of the safety system for a chest of drawers according to the embodiment of the present invention;
FIG. 3 is a side sectional view showing a chest of drawers equipped with the safety system according to the embodiment of the present invention; and
FIG. 4 is an exploded perspective view showing a drive unit of a safety system according to another embodiment of the present invention.

### DETAILED DESCRIPTION

Some embodiments of the present invention will be described in detail below with reference to the exemplary drawings. It should be noted that when reference symbols are assigned to the components of the accompanying drawings, the same reference symbol will be assigned to the same components as much as possible even when the components are shown in different drawings. Furthermore, in the following description of the present invention, if a detailed description of a related well-known configuration or function is determined to make the gist of the present embodiment obscure, the detailed description will be omitted.

The terms "first," "second," etc, "i," "ii," etc. "a," "b," etc, and the like may be used to denote components of embodiments of the present invention. These terms are each used to distinguish one component from other components, but do not denote the essence, sequential position or importance of a corresponding component. Furthermore, when any component is described as "including" or "having" another component in the specification, this does not exclude a third component, but may include the third component, unless clearly described on the contrary. Furthermore, when a component is described as being "connected to," "installed in," or "attached to" another component in the specification, this should be interpreted in the widest sense so that it includes both a case where the former component is directly connected to, installed in, or attached to the latter component and a case where the former component is connected to, installed in, or attached to the latter component indirectly or by way of a third component.

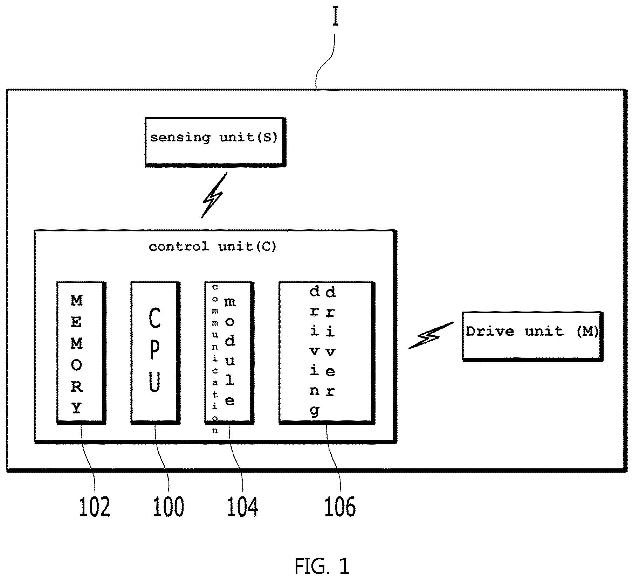

FIG. 1 is a view showing the overall configuration of a safety system 1 for a chest of drawers 10 according to an embodiment of the present invention.

The safety system 1 includes a control unit C, a sensing unit S, and a drive unit M. The sensing unit S detects a signal when the drawer 20 is pulled forward or retracted backward in the chest of drawers 10. The control unit C moves the sliding units 2 to the distance to which the drawer 20 has been pulled via the drive unit M based on the signal of the sensing unit S. The control unit C includes a CPU 100, memory 102, a communication module 104, and a driving driver 106. The communication module 104 functions to wirelessly communicate with the sensing unit S and the drive unit M. However, the control unit C may be connected to the sensing unit S and the drive unit M through, for example, cables via wired connections. The driving driver 106 controls the drive unit M by transmitting an operation signal to the drive unit M.

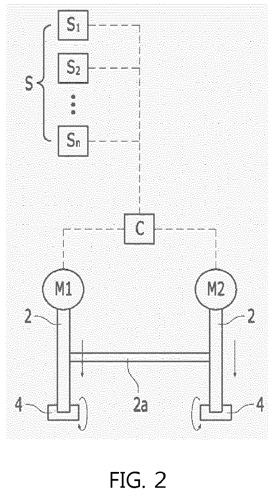

As shown in FIG. 2, the sensing unit S includes a plurality of sensors S1, S2,..., and Sn which are located opposite to the back surfaces of respective drawers 20. Although the location where the sensing unit S is installed is not limited, three sensors S1, S2, and S3 may be disposed when the number of drawers is three in a vertical direction. Each of the sensors S1, S2,..., and Sn generates a signal corresponding to the forward or backward movement of a corresponding drawer 20 and a distance of movement, and transfers the signal to the control unit C. Each of the sensors S1, S2,..., and Sn may include an ultrasonic sensor in order to detect the distance to which the drawer 20 has been moved. Furthermore, each of the sensors S1, S2,..., and Sn may include an amplifier in order to amplify a parameter, for example, a current value, in proportion to the distance of movement, and may transmit the parameter.

The control unit C calculates the distance to which the drawer has been moved based on the signal of the sensing unit S, and operates the drive unit M to a distance corresponding to the calculated distance. The memory 102 of the control unit C stores a table of distance values corresponding to signal values, for example, the amounts of current, of the sensing unit S.

The drive unit M includes a pair of motors M1 and M2 disposed on the lower portions of the left and right sides of the chest of drawers 10, respectively, as drive sources, and sliding units 2 connected to the respective motors M1 and M2 and configured to be linearly moved. Wheels 4 are mounted on the front ends of the sliding units 2, and are moved by the forward or backward movement of the sliding units 2. It is preferred that the pair of sliding units 2 are connected via a rod-shaped bridge 2a and simultaneously moved to the same distance.

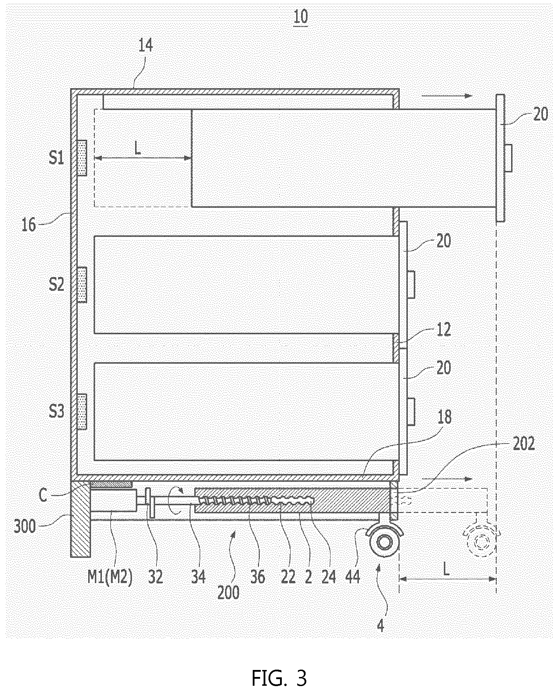

The drive unit M may be installed on a frame which is disposed below the chest of drawers and supports the chest of drawers. For example, FIG. 3 is a side sectional view showing a chest of drawers 10 equipped with the safety system 1 according to the embodiment of the present invention.

The overall frame of the chest of drawers 10 includes a front portion 12, an upper plate 14, a back portion 16, and a lower plate 18. The frame provides a square space as a whole. The drawers 20 are installed in the chest of drawers 10 in a height direction. The drawers 20 are slidable in a forward or backward direction. In the shown example, a chest of drawers having three rows of drawers is disclosed.

The sensors S1, S2 and S3 of the sensing unit S are installed on the back portion 16 of the frame at locations opposite to the back surfaces of the respective drawers 20. When the uppermost drawer 20 is moved, a signal indicative of the distance L to which the drawer 20 has been moved is detected by the sensor S1. When the sensor S1 is, for example, an ultrasonic sensor, the sensor S1 measures current round trip time, detects time delay in current round trip based on the round trip time during which a transmitted wave is transmitted over the shortest distance when the drawer 20 is not moved, is reflected from the back surface of the drawer 20, and is returned, and transmits a signal corresponding to the time delay to the control unit C. The movement and movement distance of the drawer 20 are measured by the sensor S1 in real time. When an opened drawer is closed, i.e., when the distance of movement L is decreased, the sensing unit S transmits a corresponding signal to the control unit C.

The control unit C may be disposed on the bottom surface of the lower plate 18. However, the location where the control unit C is installed is not limited as long as the control unit C can communicate with the sensing unit S and the drive unit M at the location.

The control unit C receives transmission signals of the sensors S1, S2, and S3, and reads distances of movement L stored in the memory 102. The control unit C operates even when receiving a movement signal from one of the sensors S1, S2 and S3. Furthermore, the control unit C reads the longest distance of movement L when receiving movement signals from the plurality of sensors S1, S2 and S3. In other words, when only one of the drawers 20 is pulled forward, the sliding units 2 are moved forward. In contrast, when two or more of the drawers 20 are simultaneously pulled forward, the sliding units 2 are moved to a distance corresponding to the longest distance of movement to which one of the drawers 20 has been moved. This is advantageous to the securement of wide safety in the case where an infant or child pulls or holds the drawer(s) 20.

The drive unit M is accommodated in long housings 200 installed below the lower plate 18 of the chest of drawers 10. The housings 200 include a pair of housings which are installed below the left and right sides of the chest of drawers 10. One of the housings 200 accommodates the motor M1, a driving gear 32 coupled to the shaft of the motor M1, and a linear rod 34 configured to be rotated by the rotation of the driving gear 32 sequentially from the left side of the drawing. Teeth 36 are formed on the outer circumference of the linear rod 34.

A guide hole 24 is longitudinally made through each of the sliding units 2, and teeth 22 configured to engage with the teeth 36 are formed on the inner circumference of the guide hole 24. The rotatable wheel 4 is attached to the front end of the sliding unit 2 with the cover 44 interposed therebetween.

A support column 300 is disposed below the back of the chest of drawers 10 at a location adjacent to the housings 200. The support column 300 comes into contact with a floor surface, is installed at the same height as the wheels 4, and, thus, can maintain the balance of the chest of drawers 10 regardless of whether the sliding units 2 are moved forward or backward. The support column 300 may be integrated with the housings 200.

Although the wheels 4 include a pair of wheels below the fronts of the drawers 20, they may further include wheels on the bottom surfaces or centers of the housings 200 at locations adjacent to the motors M1 and M2.

When the motors M1 and M2 are rotated in one direction, the linear rods 34 are rotated, and the sliding units 2 having the teeth 22 engaging with the teeth 36 are moved forward. In contrast, when the motors M1 and M2 are rotated in the other direction, the sliding units 2 are moved backward. Parts of the front surface 202 and bottom surface of the housings 200 are open, and thus the movement of the sliding units 2 and the sliding movement of the wheel 4 are prevented from interfering with adjacent members.

When the motors M1 and M2 are used as drive sources, the distances of movement L stored in the memory 102 of the control unit C may actually be data representative of the rotation directions and amounts of rotation or driving times of the motors M1 and M2. The control unit C reads the data and controls the driving driver 106, and the motors M1 and M2 are rotated in a predetermined direction, and over a predetermined angle or during a predetermined driving time, in response to a signal of the driving driver 106.

FIG. 3 shows an example of a chest of drawers 10 equipped with the safety system 1, and may be subjected to various modifications.

For example, racks are installed on the sliding units 2 and are made to engage with the pinions of the motors, and thus the sliding units 2 may be selectively moved forward and backward by the rotation of the motors.

Although the control unit C has been described as using a wireless communication method, it may be connected to the sensing unit S and the drive unit M through cables via wired connections. Furthermore, a threshold value may be set such that the sliding units 2 do not operate when the distance of movement L of the drawer is shorter and the control unit C transmits a signal when the distance of movement L is equal to or longer than a predetermined distance, for example, 5 cm. Moreover, it may be possible to assign a predetermined proportional factor to the data corresponding to the distances of movement L stored in the memory 102 and perform control so that the sliding units 2 are moved in proportion to the distance of movement of the drawer.

Furthermore, an object sensor may be further installed in front of the sliding units 2, and, thus, may stop the operations of the motors M1 and M2 by transmitting a signal to the control unit C when a body, such as a leg of a child, or an object, such as an obstacle, within the distance of movement of the sliding units 2, thereby securing operation safety.

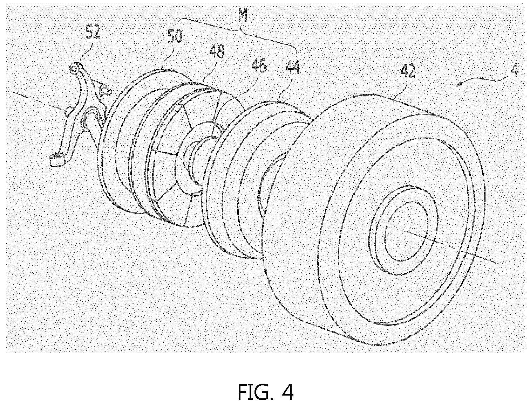

FIG. 4 shows a drive unit M according to another embodiment of the present invention. The drive unit M includes an in-wheel system which is mounted inside each wheel 4.

More specifically, the casing 42 of the wheel 4 accommodates a rotor 44, a coil and inverter unit 48 coupled to a bearing 46 protruding from the rotor 44, and a stator 50 sequentially from the right side of the drawing. The other wheel 4 has the same structure. The two wheels may be connected by a common shaft. Reference symbol 52 denotes a suspension member configured to support the cover or shaft around the wheel 4.

When the coil and inverter unit 48 receives a drive signal from the control unit C, an inverter converts DC power into AC power, and applies starting torque to the rotor 44, thereby rotating the wheel 4. The in-wheel system is similar to the in-wheel drive motor of an electric vehicle. When an in-wheel system is employed, the drive unit M may be formed in a compact form, and the design of the sliding units 2 and the surrounding member is simple and convenient.

According to the above-described present invention, the drive unit M is installed below the chest of drawers 10, and thus the effect of stably supporting the chest of drawers 10 is achieved. Furthermore, when an upper drawer 20 is pulled forward and the center of gravity of the chest of drawers 10 is moved upward and imbalanced, the sliding units 2 are moved forward and the center of gravity of the chest of drawers 10 is returned to a lower location, with the result that balance is restored. Even when an infant or child holds the drawer or climbs aboard the drawer, the chest of drawers 10 can be reliably prevented from falling over. Furthermore, when the drawer 20 is pushed and closed, the sliding units 2 are automatically moved backward, the safety system 1 is conveniently managed.

While the present invention has been described based on some embodiments, the above embodiments are merely examples, and the present invention may be subjected to various modifications, as follows:
For example, other power sources, such as hydraulic actuators, may be used as the drive sources of the drive unit M. The sliding units may further include elastic members, such as springs, in order to facilitate sliding operations. Furthermore, the sensors of the sensing unit may be installed at locations opposite to the front surfaces, side surfaces or top surfaces of the drawers as well as locations opposite to the back portions of the drawers, and may detect the distance to which the front surface or back surface of each of the drawers. Furthermore, it may be possible to install sensors and separate auxiliary sensors on the outsides of the drawers and detect a distance of movement through communication between two of the sensors.

The present invention may be altered or modified in various forms within the scope of the attached claims.

It will be apparent that the range of the rights of the present invention encompasses ranges identical and equivalent to the attached claims.

## Claims

1. A safety system for a chest of drawers having drawers, the safety system comprising:
a sensing unit configured to detect a signal when each of drawers is pulled forward;
a drive unit configured to include a drive source and a sliding unit configured which is linearly moved by an operation of the drive source; and
a control unit configured to perform control so that the drive unit operates in accordance with a distance, to which the drawer has been pulled forward, based on the signal of the sensing unit.

2. The safety system of claim 1, wherein the sensing unit includes one or more sensors installed on a chest of drawers at locations adjacent to the drawers, and each of the sensors transmits a movement signal based on a distance of movement of a corresponding one of the drawers to the control unit.

3. The safety system of claim 2, wherein the control unit includes a CPU, memory, a communication module, a driving driver, the memory stores data representative of distances of movement matching movement signals detected by the sensing unit, and the control unit reads the data and operates the drive unit by way of the driving driver.

4. The safety system of claim 3, wherein the drive source is a motor, and a movable wheel is attached to a front of the sliding unit.

5. The safety system of claim 2, wherein the control unit operates the drive unit when receiving a movement signal from one of the sensor, and operates the drive unit based on a longest distance of movement when receiving movement signals from two or more of the sensors.

6. The safety system of claim 5, wherein:
the drive unit is accommodated in a long housing laterally installed below a lower plate of the chest of drawers; and
the drive unit includes a motor, a driving gear coupled to a shaft of the motor, a linear rod configured to be rotated by rotation of the driving gear and configured such that teeth are formed on an outer circumference thereof, and a sliding unit configured such that a guide hole is longitudinally formed and second teeth engaging with the teeth are formed on an inner circumference of the guide hole.

7. The safety system of claim 5, wherein the drive unit includes an in-wheel drive mechanism including a rotor installed in a casing of the wheel, a coil and inverter unit coupled to a bearing protruding from the rotor, and a stator.

8. The safety system of claim 5, wherein a wheel is further installed at a center or back portion of the sliding unit.

9. The safety system of claim 5, wherein an object sensor is further installed on the sliding unit, and stops an operation of the drive unit by transmitting a signal to the control unit when an object is detected within a movement distance range of the sliding unit.

10. A chest of drawers equipped with the safety system of claim 5.
